# EUROPÄISCHE PATENTSCHRIFT

(11) **EP 1 238 749 B1**
(45) Veröffentlichungstag und Bekanntmachung des Hinweises auf die Patenterteilung: **07.12.2005**
(21) Anmeldenummer: 01105352.7
(22) Anmeldetag: 08.03.2001
(51) Int. Cl.: B23K 26/38, B23K 26/14

(54) **Verfahren und Vorrichtung zum Brennschneiden von Werkstücken**
Method and apparatus for cutting workpieces using a gun
Méthode et appareil pour le découpage par chalumeau de pièces

(43) Veröffentlichungstag der Anmeldung: 11.09.2002
(73) Patentinhaber: TRUMPF Werkzeugmaschinen GmbH + Co. KG, 71254 Ditzingen (DE)
(72) Erfinder: Horn, Dr. Armin, 71272 Renningen (DE); Mienhardt, Uwe, 70825 Korntal-Münchingen (DE); Scholich-Tessmann, Dr. Wolfgang, 71032 Böblingen (DE)
(74) Vertreter: Kohler Schmid Möbus

(56) Entgegenhaltungen:
- WO-A-99/14640
- US-A- 5 045 669
- US-A- 5 204 517
- US-A- 6 008 465

## Beschreibung

Die Erfindung betrifft ein Verfahren zum Brennschneiden von Werkstücken, das gesteuert wird und im Rahmen dessen auf das zu bearbeitende Werkstück ein Brennstrahl gerichtet wird, der in das Werkstück eindringt und das Werkstück schließlich durchsticht, wobei das Verfahren in Abhängigkeit von einem detektierten und den Durchdringungszustand des Werkstücks wiedergebenden Steuerparameter umgesteuert wird, sobald der Brennstrahl das Werkstück durchstochen hat. Die Erfindung betrifft des Weiteren eine Vorrichtung zum Brennschneiden von Werkstücken, mit einem Schneidkopf, der einen in das zu bearbeitende Werkstück eindringenden und das Werkstück schließlich durchstechenden Brennstrahl aussendet sowie mit einer numerischen Vorrichtungssteuerung, die wenigstens einen Detektor zum Detektieren zumindest eines den Durchdringungszustand des Werkstücks wiedergebenden Steuerparameters, eine mit dem oder den Detektoren in Verbindung stehende Auswerteeinheit sowie eine mit der Auswerteeinheit in Verbindung stehende Steuereinheit zur Steuerung der Parameter des Schneidvorgangs umfasst.

Bei einer Vielzahl schneidender Werkstückbearbeitungen mittels eines Brennstrahls muss der Brennstrahl das Werkstück durchstechen. In diesen Fällen kommt der frühestmöglichen Erkennung des Durchstichzeitpunktes eine große Bedeutung zu. Soll etwa ein Trennschnitt erstellt werden, so markiert der Durchstich des Brennstrahls an dem Werkstück denjenigen Zeitpunkt, zu welchem die unter entsprechender Umsteuerung des Verfahrens bzw. der Bearbeitungsmaschine die zur Trennschnitterstellung erforderliche Relativbewegung von Brennstrahl und Werkstück einsetzen kann. Beim Perforieren von Werkstücken mittels eines Brennstrahls ist mit dem Durchstechen des Werkstücks der betreffende Perforationsvorgang beendet und damit derjenige Zeitpunkt im Verfahrensablauf erreicht, zu welchem das bearbeitete Werkstück gegen ein anderes, noch zu bearbeitendes Werkstück ausgetauscht werden kann bzw. zu welchem der Brennstrahl zur Fortsetzung der Bearbeitung unter entsprechender Steuerung des Verfahrens bzw. der Bearbeitungsmaschine an einer anderen Stelle des Werkstücks anzusetzen ist. Stets bietet die frühe Erkennung des Durchstichzeitpunktes eine Möglichkeit zur Minimierung der Taktzeiten und damit zur Optimierung des gesamten Verfahrensablaufs. Zur Vermeidung fehlerhafter Werkstückbearbeitungen muss dabei allerdings eine hohe Sicherheit bei der Erkennung des Durchstichzeitpunktes gewährleistet sein. So darf etwa in dem Beispielsfall der Trennschnitterstellung die Relativbewegung von Brennstrahl und Werkstück nur unter der Voraussetzung einsetzen, dass der Brennstrahl das Werkstück auch tatsächlich durchstochen hat.

Gattungsgemäße Verfahren sowie gattungsgemäße Vorrichtungen, im Falle derer eine frühzeitige Erkennung des Durchstichzeitpunktes eines Brennstrahls an einem Werkstück und die Umsetzung der Früherkennung des Durchstichzeitpunktes in die Verfahrens- und Vorrichtungssteuerung angestrebt wird, sind in EP-A-0 873 813 und EP-A-0 344 339 beschrieben.

Gemäß EP-A-0 873 813 wird an einer Laserschneidmaschine die Größe des elektrischen Widerstandes des Mediums zwischen dem Schneidkopf der Maschine und dem bearbeiteten Werkstück detektiert. Während der Eindringphase des Laserstrahls nimmt der genannte elektrische Widerstand verhältnismäßig niedrige Werte an. Mit dem Durchstechen des Werkstücks ist ein schlagartiger Anstieg der widerstandswerte zu verzeichnen. Dieser Anstieg des elektrischen Widerstandes wird in ein Steuersignal für die vorbekannte Laserschneidmaschine umgesetzt und bewirkt so die Einleitung einer Relativbewegung von Laserschneidkopf und Werkstück zur Trennschnitterstellung.

Entsprechend wird ausweislich EP-A-0 344 339 als Steuerparameter zur Verfahrens- und Vorrichtungssteuerung die Intensität des Prozesslichtes genutzt, welches von der Bearbeitungsstelle eines Laserstrahls an einem Werkstück emittiert wird. Diese Strahlungsintensität verringert sich abrupt, sobald der Laserstrahl das Werkstück durchstochen hat.

Den Stand der Technik im Sinne einer Erhöhung der Prozesssicherheit weiterzubilden, hat sich die vorliegende Erfindung zum Ziel gesetzt.

Verfahrensbezogen wird diese Aufgabe erfindungsgemäß durch die Merkmalskombinationen der unabhängigen Patentansprüche 1 und 2 gelöst. Die erfindungsgemäßen Vorrichtungen zur Lösung der genannten Aufgabe sind in den unabhängigen Patentansprüchen 10 und 11 beschrieben.

Dabei werden gemäß den Patentansprüchen 1 und 10 wenigstens zwei potentielle Steuerparameter gleichzeitig detektiert. Ausweislich der Patentansprüche 2 und 11 wird ein einzelner potentieller Steuerparameter gleichzeitig mehrfach erfasst. In beiden Fällen werden auf der Grundlage der Steuerparameterdetektionen wenigstens zwei voneinander verschiedene potentielle Steuersignale generiert. Jedes dieser Steuersignale wird dann noch vor dem Durchstechen des Werkstücks mit dem Brennstrahl auf seine Verwertbarkeit, d.h. auf seine Aussagekraft bezüglich des Durchdringungszustandes des Werkstückes überprüft. Erweist sich keines der überprüften potentiellen Steuersignale als hinreichend aussagekräftig, so wird zur weiteren Verfahrens- bzw. Vorrichtungssteuerung auf ein von den überprüften potentiellen Steuersignalen verschiedenes Steuersignal zurückgegriffen, mittels dessen sich eine funktionsgerechte Verfahrens- und Vorrichtungssteuerung sicherstellen lässt. Dieses "Behelfs"-Steuersignal kann insbesondere auch auf der Grundlage eines Prozessparameters erzeugt werden, der von dem tatsächlichen Durchdringungszustand des Werkstücks unabhängig ist, der aber gleichwohl einen Rückschluss auf diesen Durchdringungszustand erlaubt. Beispielhaft zu nennen ist in diesem Zusammenhang die Dauer der Beaufschlagung des Werkstücks mit dem Brennstrahl, wie sie in den abhängigen Patentansprüchen 9 und 18 als Grundlage für die Erzeugung des "Behelfs"-Steuersignals genannt ist. In jedem Fall ist gewährleistet, dass die Verfahrens- und Vorrichtungssteuerung auf der Grundlage eines Steuersignals erfolgt, das bezüglich des Durchdringungszustandes des zu bearbeitenden Werkstücks eine hinreichend große Aussagekraft besitzt und das dementsprechend einen funktionssicheren Verfahrensablauf sowie einen funktionssicheren Vorrichtungsbetrieb ermöglicht. Diese Funktionssicherheit des erfindungsgemäßen Verfahrens sowie der erfindungsgemäßen Vorrichtung ist dabei auch im Falle wechselnder Bearbeitungsbedingungen gegeben. Zwar kann die Aussagekraft, die einzelnen Steuerparametern bzw. Steuerparamterdetektionen bezüglich des Durchdringungszustandes eines Werkstücks zukommt, etwa in Abhängigkeit von Material oder Dicke des Werkstückes schwanken; die erfindungsgemäße Mehrfachdetektion von Steuerparametern mit anschließender Erzeugung mehrerer potentieller Steuersignale und deren Verwertbarkeitsüberprüfung sorgt jedoch dafür, dass es sich bei dem zur Verfahrens- und Vorrichtungssteuerung letztlich herangezogenen tatsächlichen Steuersignal um ein hinsichtlich des Durchdringungszustandes des bearbeiteten Werkstückes aussagekräftiges Steuersignal handelt.

Weitere besondere Ausführungsarten der Erfindung sind in den abhängigen Patentansprüchen 3 bis 8 und 12 bis 17 beschrieben.

Mit der Intensität des an der Bearbeitungsstelle des Brennstrahls emittierten Prozesslichtes und mit dem elektrischen Widerstand des Mediums zwischen dem Schneidkopf und dem zu bearbeitenden Werkstück werden im Falle der Erfindungsvarianten nach den Patentansprüchen 3 und 4 sowie 12 und 14 Steuerparameter detektiert, welche den Durchdringungszustand des bearbeiteten Werkstücks charakteristisch wiedergeben und deren Detektion zuverlässig und mit einem verhältnismäßig geringen konstruktiven Aufwand möglich ist. Zur Detektion der Intensität des an der Bearbeitungsstelle des Brennstrahls emittierten Prozesslichtes kann beispielsweise wenigstens eine Fotodiode verwendet werden (Patentanspruch 13).

Zweckmäßige Verwertbarkeitskriterien zur Überprüfung der potentiellen Steuersignale auf deren Aussagekraft bezüglich des Durchdringungszustandes des bearbeiteten Werkstückes sind in den Patentansprüchen 5, 6 und 15 angegeben. Dabei dient die erfindungsgemäße Relativierung des Steuersignalpegels dazu, die Pegel der verschiedenen, auf unterschiedlichen Grundlagen erzeugten Steuersignale miteinander vergleichbar zu machen

Die Patentansprüche 7, 8 und 16, 17 betreffen Varianten des erfindungsgemäßen Verfahrens sowie der erfindungsgemäßen Vorrichtung, die sich in der praktischen Erprobung als besonders funktionssicher erwiesen haben.

Nachstehend wird die Erfindung anhand stark schematisierter Darstellungen zweier Ausführungsbeispiele näher erläutert. Gezeigt sind zwei Bauarten einer Vorrichtung zum Brennschneiden von Blechen mittels eines Laserstrahls.

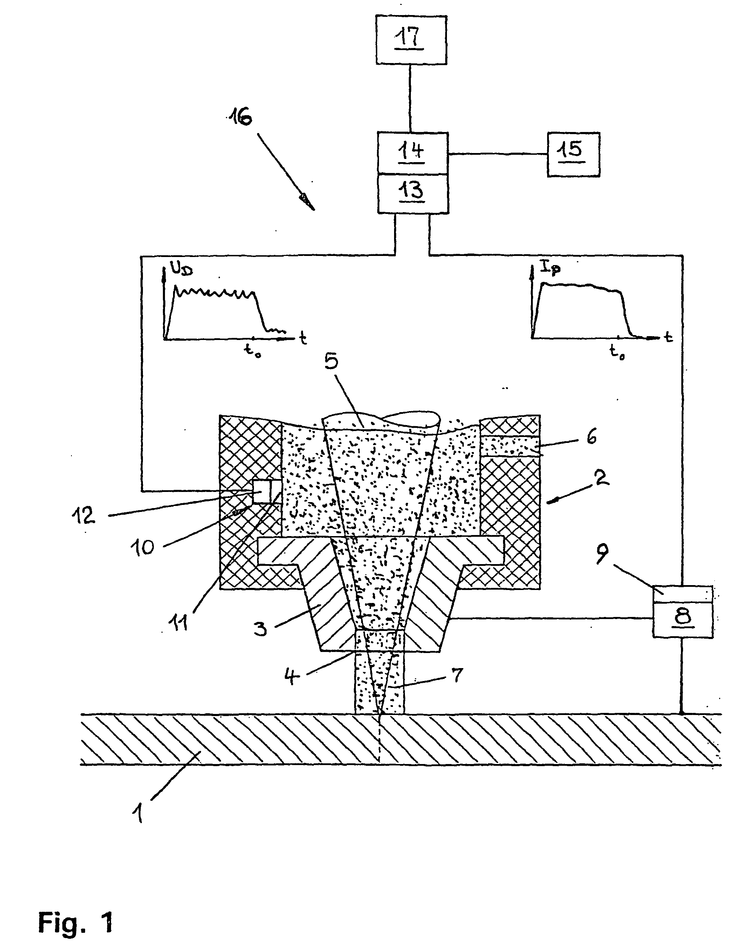

Ausweislich Figur 1 umfasst eine Vorrichtung zum Laserschneiden von Werkstücken in Form von Blechen 1 als Schneidkopf einen Laserschneidkopf 2 mit einer aus einem elektrisch leitenden Werkstoff gefertigten Laserdüse 3. Die Laserdüse 3 ist gegenüber weiteren Teilen des Laserschneidkopfs 2 elektrisch isoliert. An einer Düsenmündung 4 tritt aus dem Laserschneidkopf 2 ein Brennstrahl in Form eines Laserstrahls 5 aus, der auf das Blech 1 gerichtet wird und dieses nach einer Eindringphase, wie in Figur 1 gestrichelt angedeutet, durchsticht. Über eine Gaszuführung 6 wird Schneidgas, im dargestellten Beispielsfall Stickstoff, in den Laserschneidkopf 2 aufgegeben. Ein Schneidgasstrahl 7 verlässt den Laserschneidkopf 2 durch die Düsenmündung 4 und gelangt dabei ebenfalls auf das Blech 1.

Eine Widerstandsmesseinrichtung 8 ist an die elektrisch leitende Laserdüse 3 sowie an das ebenfalls elektrisch leitende Blech 1 angeschlossen und mit einem Signalgeber 9 gekoppelt. Im Innern des Laserschneidkopfs 2 ist eine Fotodiode 10 untergebracht, die einen lichtempfindlichen Teil 11 sowie einen damit verbundenen Signalgeber 12 umfasst. Letzterer steht ebenso wie der Signalgeber 9 der Widerstandsmesseinrichtung 8 mit einem Analog/Digital-Wandler (A/D Wandler) 13 in Verbindung, der seinerseits einem Auswerterechner 14 vorgeschaltet ist. Außer mit dem A/D Wandler 13 ist der Auswerterechner 14 mit einer Zeitmesseinrichtung 15 verbunden.

Gemeinsam mit den Signalgebern 9, 12 und dem A/D Wandler 13 bildet der Auswerterechner 14 eine Auswerteeinheit 16. Diese ist mit einer Steuereinheit 17 zur Steuerung der Parameter des Schneidvorgangs verbunden.

Die Widerstandsmesseinrichtung 8 sowie der lichtempfindliche Teil 11 der Fotodiode 10 bilden Detektoren zur Erfassung potentieller Steuerparameter für die Steuerung der dargestellten Laserschneidvorrichtung bzw. für die Steuerung des mit dieser Vorrichtung durchgeführten Verfahrens. Mittels der Widerstandsmesseinrichtung 8 wird dabei als potentieller Steuerparameter der elektrische Widerstand des Mediums zwischen dem Laserschneidkopf 2 und dem Blech 1, mit dem lichtempfindlichen Teil 11 der Fotodiode 10 die Intensität des an der Bearbeitungsstelle des Laserstrahls 5 emittierten und in das Innere des Laserschneidkopfs 2 gelangenden Prozesslichtes erfasst. Sowohl der genannte elektrische Widerstand als auch die genannte Lichtintensität sind abhängig von dem Durchdringungszustand des Blechs 1. Während der Eindringphase des Laserstrahls 5 an dem Blech 1 nimmt der elektrische Widerstand des Mediums zwischen dem Laserschneidkopf 2 und dem Blech 1 verhältnismäßig niedrige Werte an. Gleichzeitig besitzt das an der Bearbeitungsstelle emittierte Prozesslicht eine verhältnismäßig hohe Intensität. Eine schlagartige Änderung der Verhältnisse tritt ein, sobald der Laserstrahl 5 das Blech 1 durchsticht. Dann steigen die Werte des genannten elektrischen Widerstandes steil an; die Intensität des an der Bearbeitungsstelle emittierten Prozesslichtes nimmt abrupt ab. Entsprechende Signale werden auf der Grundlage der mit der Widerstandsmesseinrichtung 8 sowie dem lichtempfindlichen Teil 11 der Fotodiode 10 durchgeführten Steuerparameterdetektionen erzeugt und von den Signalgebern 9, 12 abgegeben. Mögliche Signalverläufe sind in Figur 1 beispielhaft dargestellt.

Von dem Signalgeber 9 der Widerstandsmesseinrichtung 8 geht dabei ein zeitabhängiges Stromsignal aus, welches die zeitliche Entwicklung der Stromstärke Iₚ desjenigen Stromes wiedergibt, der dem elektrischen Widerstand des Mediums zwischen der Laserdüse 3 und dem Blech 1 zugeordnet ist.

Der Signalgeber 12 gibt ein zeitabhängiges Spannungssignal ab. Dieses Spannungssignal entspricht dem zeitlichen Verlauf der Diodenspannung U_{D} an der Fotodiode 10 und wird bestimmt durch die zeitliche Entwicklung der mittels der Fotodiode 10 detektierten Intensität des Prozesslichtes an der Bearbeitungsstelle des Laserstrahls 5.

Die von den Signalgebern 9, 12 ausgehenden Signale sind analoger Natur und bilden potentielle Steuersignale, d.h. diese Signale kommen grundsätzlich als Basis für die Steuerung der Laserschneidvorrichtung bzw. des Laserschneidverfahrens in Abhängigkeit von dem Durchdringungszustand des Blechs 1 in Frage.

Darüber, ob und gegebenenfalls welches der beiden potentiellen Steuersignale als tatsächliches Steuersignal zur Vorrichtungs- und Verfahrenssteuerung herangezogen wird, entscheidet eine in der Auswerteeinheit 16 durchgeführte Verwertbarkeitsüberprüfung der beiden potentiellen Steuersignale. Zu diesem Zweck werden die von den Signalgebern 9, 12 stammenden Analogsignale zunächst mittels des A/D Wandlers 13 in digitale Signale umgewandelt. Bezüglich jedes der digitalisierten potentiellen Steuersignale ermittelt der Auswerterechner 14 dann die Werte des Gradienten des Steuersignalverlaufs über der Zeit sowie die Werte des relativen Steuersignalpegels. Die Werte der relativen Steuersignalpegel werden dabei bestimmt als tatsächliche Werte der Steuersignalpegel bezogen auf einen jeweiligen Maximalwert. Bei den Maximalwerten der Steuersignalpegel handelt es sich um Referenzwerte, die in der Steuerung der Laserschneidvorrichtung hinterlegt sind und/oder die.empirisch auf der Basis einer probeweisen Werkstückbearbeitung ermittelt werden. Zu einem bestimmten Zeitpunkt werden die ermittelten Werte des Gradienten des Steuersignalverlaufs über der Zeit sowie die ermittelten Werte des relativen Steuersignalpegels jeweils mit einem Schwellenwert verglichen, der empirisch bestimmt worden ist.

Für die weitere Steuerung der Laserschneidvorrichtung und des Laserschneidverfahrens wird - sofern nur eines der digitalisierten potentiellen Steuersignale sowohl mit dem Wert des Gradienten des Steuersignalverlaufs als auch mit dem Wert des relativen Steuersignalpegels über dem zugehörigen Schwellenwert liegt - dieses potentielle Steuersignal als tatsächliches Steuersignal herangezogen. Erfüllen beide überprüften potentiellen Steuersignale die beiden genannten Verwertbarkeitskriterien, so wird der weiteren Vorrichtungs- und Verfahrenssteuerung dasjenige potentielle Steuersignal als tatsächliches Steuersignal zugrunde gelegt, welches mit dem Wert seines relativen Steuersignalpegels den zugehörigen Schwellenwert am weitesten übersteigt. Werden die beiden genannten Verwertbarkeitskriterien von keinem der überprüften potentiellen Steuersignale erfüllt, so erfolgt die weitere Vorrichtungs- und Verfahrenssteuerung anhand eines Steuersignals, das in Abhängigkeit von der mittels der Zeitmesseinrichtung 15 bestimmten Dauer der Beaufschlagung des Blechs 1 mit dem Laserstrahl 5 generiert wird. Der Zeitpunkt der vorstehend beschriebenen Verwertbarkeitsüberprüfung sowie der Auswahl des tatsächlichen Steuersignals ist so gewählt, dass der Laserstrahl 5 das Blech 1 mit Sicherheit noch nicht durchstochen hat. Bis zum Abschluss der Verwertbarkeitsüberprüfung der beiden betreffenden potentiellen Steuersignale erfolgt die Vorrichtungs- und Verfahrenssteuerung ebenfalls auf der Grundlage eines anhand der Dauer der Beaufschlagung des Blechs 1 mit dem Laserstrahl 5 erzeugten Steuersignals. In Abhängigkeit von dem Ergebnis der Verwertbarkeitsüberprüfung wird dann entweder ein Wechsel zu einem der überprüften potentiellen Steuersignale vollzogen oder aber weiterhin ein von der Dauer der Beaufschlagung des Blechs 1 mit dem Laserstrahl 5 abhängiges Steuersignal verwendet.

Anhand einer Auswertung desjenigen Steuersignals das von den überprüften potentiellen Steuersignalen als tatsächliches Steuersignal ausgewählten worden ist, erkennt die Auswerteeinheit 16 den Zeitpunkt, zu welchem der Laserstrahl 5 das Blech 1 durchsticht. Unmittelbar mit Erkennen des Durchstichzeitpunktes bewirkt die Auswerteeinheit 16 durch entsprechendes Ansteuern der Steuereinheit 17 für die Parameter des Schneidvorgangs eine funktionsgerechte Vorrichtungs- und Verfahrensumsteuerung. Im dargestellten Beispielsfall besteht diese Umsteuerung in der Einleitung einer Relativbewegung von Laserschneidkopf 2 und Blech 1 in Schnittrichtung eines zu erstellenden Trennschnittes. Entsprechend wird verfahren, sofern die Vorrichtungs- und Verfahrenssteuerung auf der Grundlage der Dauer der Beaufschlagung des Blechs 1 mit dem Laserstrahl 5 erfolgt. Die vorprogrammierte Dauer der Beaufschlagung des Blechs 1 mit dem Laserstrahl 5, nach deren Ablauf bei entsprechendem Ergebnis der Verwertbarkeitsüberprüfung die Vorrichtung und das Verfahren umgesteuert werden, ist unter Berücksichtigung eines Sicherheitszuschlages festgesetzt. Infolgedessen ist gewährleistet, dass bei von der Beaufschlagungsdauer abhängiger Steuerung das Blech 1 bei Einleitung der Vorrichtungs- und Verfahrensumsteuerung auf jeden Fall von dem Laserstrahl 5 durchstochen ist.

Die Entwicklung der von den Signalgebern 9, 12 stammenden Analogsignale infolge des Durchstechens des Blechs 1 mit dem Laserstrahl 5 ist aus den in Figur 1 gezeigten Signalverläufen ersichtlich. Zum Durchstichzeitpunkt tₒ fallen Diodenspannung U_{D} und Stromstärke Iₚ schlagartig ab.

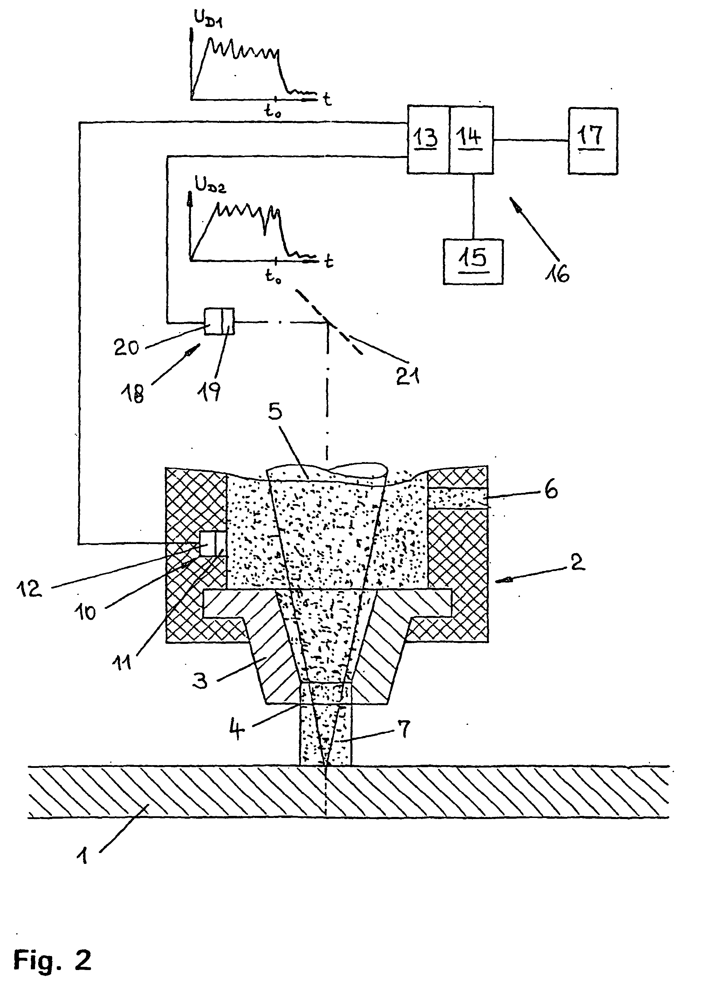

Die in Figur 2 dargestellte Laserschneidvorrichtung unterscheidet sich von der Bauart nach Figur 1 dadurch, dass anstelle einer Widerstandsmesseinrichtung mit Signalgeber eine zweite Fotodiode 18 vorgesehen ist. Diese umfasst einen lichtempfindlichen Teil 19 sowie einen Signalgeber 20. Im Übrigen stimmen die Laserschneidvorrichtungen nach den Figuren 1 und 2 in Aufbau und Funktionsweise miteinander überein. Einander entsprechenden Bauteilen sind dieselben Bezugszeichen zugeordnet.

Wie Figur 2 entnommen werden kann, ist die Fotodiode 18 von der Fotodiode 10 im Strahlengang der Laserschneidvorrichtung beabstandet. Im dargestellten Beispielsfall befindet sich die Fotodiode 10 an der zu der Bearbeitungsstelle hinliegenden Seite eines Umlenkspiegels 21, die Fotodiode 18 zwischen dem Umlenkspiegel 21 und dem Lasergenerator. Auch der lichtempfindliche Teil 19 der Fotodiode 18 dient als Detektor zur Erfassung der Intensität des an der Bearbeitungsstelle des Laserstrahls 5 emittierten Prozesslichtes. Infolge ihrer unterschiedlichen Anordnung erfassen die Fotodioden 10, 18 dabei verschiedene Ausschnitte aus dem genannten Prozesslicht.

Aufgrund jeder der beiden, mittels der Fotodioden 10, 18 durchgeführten Steuerparameterdetektionen wird ein potentielles Steuersignal in Form eines Spannungssignales erzeugt. Das potentielle Steuersignal zu der mittels der Fotodiode 10 durchgeführten Steuerparameterdetektion gibt dabei den zeitabhängigen Verlauf der Diodenspannung U_{D1} an der Fotodiode 10, das potentielle Steuersignal zu der mittels der Fotodiode 18 durchgeführten Steuerparameterdetektion den zeitabhängigen Verlauf der Diodenspannung U_{D2} an der Fotodiode 18 wieder. Aufgrund der unterschiedlichen Positionen der Fotodioden 10, 18 sind trotz deren Baugleichheit die erzeugten potentiellen Steuersignale voneinander verschieden.

Die Verarbeitung der beiden analogen potentiellen Steuersignale in der Auswerteeinheit 16 erfolgt wie vorstehend zu Figur 1 im Einzelnen beschrieben. Auch im Falle der Vorrichtungsbauart nach Figur 2 wird - sofern keines der potentiellen Steuersignale die der Verwertbarkeitsüberprüfung zugrunde gelegten Verwertbarkeitskriterien erfüllt - der Vorrichtungs- und Verfahrenssteuerung ein Steuersignal zugrunde gelegt, das in Abhängigkeit von der Dauer der Beaufschlagung des Blechs 1 mit dem Laserstrahl 5 erzeugt wird.

Die beiden gezeigten Vorrichtungen sowie wie die mit diesen durchgeführten Verfahren zeichnen sich durch eine hohe Prozesssicherheit auch bei wechselnden Bearbeitungsverhältnissen aus.

So besitzen die erzeugten potentiellen Steuersignale etwa je nach Material oder Dicke des zu bearbeitenden Werkstückes oder je nach Laserbetriebsart (Dauerstrichbetrieb, Pulsbetrieb) unterschiedlich große Aussagekraft. Aufgrund der durchgeführten Verwertbarkeitsüberprüfung ist jedoch sichergestellt, dass zur Vorrichtungs- und Verfahrenssteuerung jeweils ein bezüglich des Durchdringungszustandes des Blechs 1 aussagekräftiges und somit Funktionssicherheit bietendes Steuersignal herangezogen wird. Unterschiedliche Einsatzbedingungen lassen sich auf diese Weise gleichzeitig abdecken.

## Patentansprüche

1. Verfahren zum Brennschneiden von Werkstücken (1), das gesteuert wird und im Rahmen dessen auf das zu bearbeitende Werkstück (1) ein Brennstrahl (5) gerichtet wird, der in das Werkstück (1) eindringt und das Werkstück (1) schließlich durchsticht, wobei das Verfahren in Abhängigkeit von einem detektierten und den Durchdringungszustand des Werkstücks (1) wiedergebenden Steuerparameter umgesteuert wird, sobald der Brennstrahl (5) das Werkstück (1) durchstochen hat, **gekennzeichnet durch** folgende, vor dem Durchstechen des Werkstücks (1) mit dem Brennstrahl (5) durchgeführte Verfahrensschritte:
- fortlaufend werden wenigstens zwei potentielle Steuerparameter gleichzeitig detektiert,
- auf der Grundlage der Steuerparameterdetektionen wird zu wenigstens zwei potentiellen Steuerparametern jeweils wenigstens ein potentielles Steuersignal erzeugt,
- wenigstens zwei, verschiedenen potentiellen Steuerparametern zugeordnete potentielle Steuersignale werden jeweils nach zumindest zwei Verwertbarkeitskriterien überprüft, die vorrangig oder nachrangig sind und von denen wenigstens ein vorrangiges Verwertbarkeitskriterium qualifiziert erfüllbar ist,
- für die weitere Steuerung des Verfahrens wird,
-- sofern nur eines der potentiellen Steuersignale wenigstens zwei Verwertbarkeitskriterien erfüllt, dieses potentielle Steuersignal als tatsächliches Steuersignal herangezogen,
und/oder
-- sofern mehrere der potentiellen Steuersignale wenigstens zwei Verwertbarkeitskriterien erfüllen, dasjenige potentielle Steuersignal als tatsächliches Steuersignal herangezogen, welches das vorrangige Verwertbarkeitskriterium am qualifiziertesten erfüllt
und/oder
-- sofern keines der potentiellen Steuersignale wenigstens zwei Verwertbarkeitskriterien erfüllt, anstelle eines dieser potentiellen Steuersignale ein davon verschiedenes Steuersignal als tatsächliches Steuersignal herangezogen.

2. Verfahren nach dem Oberbegriff von Anspruch 1, **gekennzeichnet durch** folgende, vor dem Durchstechen des Werkstücks (1) mit dem Brennstrahl (5) durchgeführte Verfahrensschritte:
- fortlaufend wird ein potentieller oder tatsächlicher Steuerparameter gleichzeitig mehrfach detektiert,
- auf der Grundlage der Steuerparameterdetektionen wird zu wenigstens zwei von diesen jeweils wenigstens ein potentielles Steuersignal erzeugt, wobei die den verschiedenen Steuerparameterdetektionen zugeordneten potentiellen Steuersignale voneinander verschieden sind,
- wenigstens zwei, verschiedenen Steuerparameterdetektionen zugeordnete potentielle Steuersignale werden jeweils nach zumindest zwei Verwertbarkeitskriterien überprüft, die vorrangig oder nachrangig sind und von denen wenigstens ein vorrangiges Verwertbarkeitskriterium qualifiziert erfüllbar ist,
- für die weitere Steuerungen des Verfahrens wird,
-- sofern nur eines der potentiellen Steuersignale wenigstens zwei Vewertbarkeitskriterien erfüllt, dieses potentielle Steuersignal als tatsächliches Steuersignal herangezogen
und/oder
-- sofern mehrere der potentiellen Steuersignale wenigstens zwei Verwertbarkeitskriterien erfüllen, dasjenige potentielle Steuersignal als tatsächliches Steuersignal herangezogen, welches das vorrangige Verwertbarkeitskriterium am qualifiziertesten erfüllt
und/oder
-- sofern keines der potentiellen Steuersignale wenigstens zwei Verwertbarkeitskriterien erfüllt, anstelle eines dieser potentiellen Steuersignale ein davon verschiedenes Steuersignal als tatsächliches Steuersignal herangezogen.

3. Verfahren nach einem der Ansprüche 1 und 2, **dadurch gekennzeichnet, dass** als einer der potentiellen Steuerparameter bzw. als potentieller oder tatsächlicher Steuerparameter die Intensität des an der Bearbeitungsstelle des Brennstrahls (5) emittierten Prozesslichtes detektiert wird.

4. Verfahren nach einem der vorhergehenden Ansprüche zum Brennschneiden elektrisch leitender Werkstücke (1) mittels eines mit Abstand von dem zu bearbeitenden Werkstück (1) angeordneten Schneidkopfs (2), **dadurch gekennzeichnet, dass** als einer der potentiellen Steuerparameter bzw. als potentieller oder tatsächlicher Steuerparameter der elektrische Widerstand des Mediums zwischen dem Schneidkopf (2) und dem zu bearbeitenden Werkstück (1) detektiert wird.

5. Verfahren nach einem der vorhergehenden Ansprüche, **dadurch gekennzeichnet, dass** als Verwertbarkeitskriterium, nach dem die potentiellen Steuersignale überprüft werden, der Wert des Gradienten des Steuersignalverlaufs über der Zeit bezogen auf einen Schwellenwert für den Gradienten und/oder der Wert des relativen Steuersignalpegels (tatsächlicher Steuersignalpegel bezogen auf einen Maximalwert des Steuersignalpegels) bezogen auf einen Schwellenwert für den relativen Steuersignalpegel herangezogen wird.

6. Verfahren nach einem der vorhergehenden Ansprüche, **dadurch gekennzeichnet, dass** als Verwertbarkeitskriterien, nach denen die potentiellen Steuersignale überprüft werden, der Wert des Gradienten des Steuersignalverlaüfs über der Zeit bezogen auf einen Schwellenwert für den Gradienten sowie der Wert des relativen Steuersignalpegels bezogen auf einen Schwellenwert für den relativen Steuersignalpegel herangezogen werden, wobei das letztgenannte Verwertbarkeitskriterium vorrangig und qualifiziert erfüllbar ist.

7. Verfahren nach einem der Ansprüche 1 und 3 bis 6 zum Brennschneiden elektrisch leitender Werkstücke (1) mittels eines mit Abstand von dem zu bearbeitenden Werkstück (1) angeordneten Schneidkopfs (2), **gekennzeichnet durch** folgende, vor dem Durchstechen des Werkstücks (1) mit dem Brennstrahl (5) durchgeführte Verfahrensschritte:
- fortlaufend werden als potentielle Steuerparameter gleichzeitig die Intensität des an der Bearbeitungsstelle des Brennstrahls (5) emittierten Prozesslichtes sowie der elektrische Widerstand des Mediums zwischen dem Schneidkopf (2) und dem zu bearbeitenden Werkstück (1) detektiert,
- auf der Grundlage der Detektionen der beiden genannten potentiellen Steuerparameter wird zu jedem von diesen ein potentielles Steuersignal erzeugt,
- jedes der beiden potentiellen Steuersignale wird darauf überprüft, ob der Wert des Gradienten des Steuersignalverlaufs über der Zeit einen vorgegebenen Schwellenwert für den Gradienten und ob und gegebenenfalls wie weit der Wert des relativen Steuersignalpegels einen vorgegebenen Schwellenwert für den relativen Steuersignalpegel übersteigt (Verwertbarkeitskriterien),
- für die weitere Steuerung des Verfahrens wird,
-- sofern nur eines der beiden potentiellen Steuersignale die beiden genannten Verwertbarkeitskriterien erfüllt, dieses potentielle Steuersignal als tatsächliches Steuersignal herangezogen
und/oder
-- sofern beide potentiellen Steuersignale die beiden genannten Verwertbarkeitskriterien erfüllen, dasjenige potentielle Steuersignal als tatsächliches Steuersignal herangezogen, welches mit dem Wert seines relativen Steuersignalpegels den zugehörigen Schwellenwert am weitesten übersteigt
und/oder
-- sofern keines der beiden potentiellen Steuersignale die beiden genannten Verwertbarkeitskriterien erfüllt, anstelle eines dieser potentiellen Steuersignale ein davon verschiedenes Steuersignal als tatsächliches Steuersignal herangezogen.

8. Verfahren nach einem der Ansprüche 2 bis 6, **gekennzeichnet durch** folgende, vor dem Durchstechen des Werkstücks (1) mit dem Brennstrahl (5) durchgeführte Verfahrensschritte:
- fortlaufend wird als potentieller oder tatsächlicher Steuerparameter die Intensität des an der Bearbeitungsstelle des Brennstrahls (5) emittierten Prozesslichtes gleichzeitig zweifach detektiert,
- auf der Grundlage der beiden Steuerparameterdetektionen wird zu jeder von diesen ein potentielles Steuersignal erzeugt, wobei die beiden erzeugten potentiellen Steuersignale voneinander verschieden sind,
- jedes der beiden potentiellen Steuersignale wird darauf überprüft, ob der Wert des Gradienten des Steuersignalverlaufs über der Zeit einen vorgegebenen Schwellenwert für den Gradienten und ob und gegebenenfalls wie weit der Wert des relativen Steuersignalpegels einen vorgegebenen Schwellenwert für den relativen Steuersignalpegel übersteigt (Verwertbarkeitskriterien),
- für die weitere Steuerung des Verfahrens wird,
-- sofern nur eines der beiden potentiellen Steuersignale die beiden genannten Verwertbarkeitskriterien erfüllt, dieses potentielle Steuersignal als tatsächliches Steuersignal herangezogen,
und/oder
-- sofern beide potentiellen Steuersignale die beiden genannten Verwertbarkeitskriterien erfüllen, dasjenige potentielle Steuersignal als tatsächliches Steuersignal herangezogen, welches mit dem Wert seines relativen Steuersignalpegels den zugehörigen Schwellenwert am weitesten übersteigt
und/oder
-- sofern keines der beiden potentiellen Steuersignale die beiden genannten Verwertbarkeitskriterien erfüllt, anstelle eines dieser beiden potentiellen Steuersignale ein davon verschiedenes Steuersignal als tatsächliches Steuersignal herangezogen.

9. Verfahren nach einem der vorhergehenden Ansprüche, **dadurch gekennzeichnet, dass** - sofern keines der überprüften potentiellen Steuersignale die betreffenden Verwertbarkeitskriterien erfüllt - zur weiteren Steuerung des Verfahrens als tatsächliches Steuersignal ein auf der Grundlage der Dauer der Beaufschlagung des Werkstücks (1) mit dem Brennstrahl (5) erzeugtes Steuersignal herangezogen wird.

10. Vorrichtung zum Brennschneiden von Werkstücken (1), mit einem Schneidkopf (2), der einen in das zu bearbeitende Werkstück (1) eindringenden und das Werkstück (1) schließlich durchstechenden Brennstrahl (5) aussendet sowie mit einer numerischen Vorrichtungssteuerung, die wenigstens einen Detektor (8, 11, 19) zum Delektieren zumindest eines den Durchdringungszustand des Werkstücks (1) wiedergebenden Steuerparameters, eine mit dem oder den Detektoren (8, 11, 19) in Verbindung stehende Auswerteeinheit (16) sowie eine mit der Auswerteeinheit (16) in Verbindung stehende Steuereinheit (17) zur Steuerung der Parameter des Schneidvorgangs umfasst, **dadurch gekennzeichnet,**
**dass** vor dem Durchstechen des Werkstücks (1) mit dem Brennstrahl (5) mittels des oder der Detektoren (8,11) fortlaufend wenigstens zwei potentielle Steuerparameter gleichzeitig detektierbar sind,
**dass** die Auswerteeinheit (16) auf der Grundlage der Steuerparameterdetektionen zu wenigstens zwei potentiellen Steuerparametern jeweils wenigstens ein potentielles Steuersignal erzeugt und wenigstens zwei, verschiedenen potentiellen Steuerparametern zugeordnete potentielle Steuersignale jeweils nach zumindest zwei Verwertbarkeitskriterien überprüft, wobei die Verwertbarkeitskriterien vorrangig oder nachrangig sind und wenigstens ein vorrangiges Verwertbarkeitskriterium qualifiziert erfüllbar ist
und **dass** die Auswerteeinheit (16) in Abhängigkeit von dem Ergebnis der Verwertbarkeitsüberprüfung der potentiellen Steuersignale die Steuereinheit (17) zur Steuerung der Parameter des Schneidvorgangs auf der Grundlage eines tatsächlichen Steuersignals ansteuert, bei dem es sich
- sofern nur eines der potentiellen Steuersignale wenigstens zwei Verwertbarkeitskriterien erfüllt - um dieses potentielle Steuersignal handelt
und/oder
- sofern mehrere der potentiellen Steuersignale wenigstens zwei Verwertbarkeitskriterien erfüllen - um dasjenige potentielle Steuersignal handelt, welches das vorrangige Verwertbarkeitskriterium am qualifiziertesten erfüllt
und/oder
- sofern keines der potentiellen Steuersignale wenigstens zwei Verwertbarkeitskriterien erfüllt - um ein von diesen potentiellen Steuersignalen verschiedenes Steuersignal handelt.

11. Vorrichtung nach dem Oberbegriff von Anspruch 10, **dadurch gekennzeichnet,**
**dass** vor dem Durchstechen des Werkstücks (1) mit dem Brennstrahl (5) mittels des oder der Detektoren (11, 19) fortlaufend ein potentieller oder tatsächlicher Steuerparameter gleichzeitig mehrfach detektierbar ist,
**dass** die Auswerteeinheit (16) auf der Grundlage der Steuerparameterdetektionen zu wenigstens zwei von diesen jeweils wenigstens ein potentielles Steuersignal erzeugt, wobei die den verschiedenen Steuerparameterdetektionen zugeordneten potentiellen Steuersignale voneinander verschieden sind,
**dass** die Auswerteeinheit (16) weiterhin wenigstens zwei verschiedenen Steuerparameterdetektionen zugeordnete potentielle Steuersignale jeweils nach zumindest zwei Verwertbarkeitskriterien überprüft, wobei die Verwertbarkeitskriterien vorrangig oder nachrangig sind und wenigstens ein vorrangiges Verwertbarkeitskriterium qualifiziert erfüllbar ist
und **dass** die Auswerteeinheit (16) schließlich in Abhängigkeit von dem Ergebnis der Verwertbarkeitsüberprüfung der potentiellen Steuersignale die Steuereinheit (17) zur Steuerung der Parameter des Schneidvorgangs auf der Grundlage eines tatsächlichen Steuersignals ansteuert, bei dem es sich
- sofern nur eines der potentiellen Steuersignale wenigstens zwei Verwertbarkeitskriterien erfüllt - um dieses potentielle Steuersignal handelt,
und/oder
- sofern mehrere der potentiellen Steuersignale wenigstens zwei Verwertbarkeitskriterien erfüllen - um dasjenige potentielle Steuersignal handelt, welches das vorrangige Verwertbarkeitskriterium am qualifiziertesten erfüllt
und/oder
- sofern keines der potentiellen Steuersignale wenigstens zwei Verwertbarkeitskriterien erfüllt - um ein von diesen potentiellen Steuersignalen verschiedenes Steuersignal handelt.

12. Vorrichtung nach einem der Ansprüche 10 und 11, **dadurch gekennzeichnet, dass** mittels des oder der Detektoren (8, 11, 19) als einer der potentiellen Steuerparameter bzw. als potentieller oder tatsächlicher Steuerparameter die Intensität des an der Bearbeitungsstelle des Brennstrahls (5) emittierten Prozesslichtes detektierbar ist.

13. Vorrichtung nach einem der Ansprüche 10 bis 12, **dadurch gekennzeichnet, dass** wenigstens ein Detektor (11, 19) von einer Fotodiode (10, 18) ausgebildet ist.

14. Vorrichtung nach einem der Ansprüche 10 bis 13, wobei der Schneidkopf (2) mit Abstand von dem zu bearbeitenden Werkstück (1) angeordnet und letzteres elektrisch leitend ist, **dadurch gekennzeichnet, dass** mittels des oder der Detektoren (8, 11, 19) als einer der potentiellen Steuerparameter bzw. als potentieller oder tatsächlicher Steuerparameter der elektrische Widerstand des Mediums zwischen dem Schneidkopf (2) und dem zu bearbeitenden Werkstück (1) detektierbar ist.

15. Vorrichtung nach einem der Ansprüche 10 bis 14, **dadurch gekennzeichnet, dass** die Auswerteeinheit (16) die betreffenden potentiellen Steuersignale nach den Verwertbarkeitskriterien gemäß Anspruch 5 oder Anspruch 6 überprüft.

16. Vorrichtung nach einem der Ansprüche 10 und 12 bis 15, wobei der Schneidkopf (2) mit Abstand von dem zu bearbeitenden Werkstück (1) angeordnet und letzteres elektrisch leitend ist, **dadurch gekennzeichnet,**
**dass** vor dem Durchstechen des Werkstücks (1) mit dem Brennstrahl (5) mittels zweier Detektoren (8, 11) fortlaufend als potentielle Steuerparameter gleichzeitig die Intensität des an der Bearbeitungsstelle des Brennstrahl (5) emittierten Prozesslichtes sowie der elektrische Widerstand des Mediums zwischen dem Schneidkopf (2) und dem zu bearbeitenden Werkstück (1) detektierbar sind,
**dass** die Auswerteeinheit (16) auf der Grundlage der Detektionen der beiden genannten potentiellen Steuerparameter zu jedem von diesen ein potentielles Steuersignal erzeugt und jedes der beiden potentiellen Steuersignale darauf überprüft, ob der Wert des Gradienten des Steuersignalverlaufs über der Zeit einen vorgegebenen Schwellenwert für den Gradienten und ob und gegebenenfalls wie weit der Wert des relativen Steuersignalpegels einen vorgegebenen Schwellenwert für den relativen Steuersignalpegel übersteigt (Verwertbarkeitskriterien)
und **dass** die Auswerteeinheit (16) in Abhängigkeit von dem Ergebnis der Verwertbarkeitsüberprüfung der beiden potentiellen Steuersignale die Steuereinheit (17) zur Steuerung der Parameter des Schneidvorgangs auf der Grundlage eines tatsächlichen Steuersignals ansteuert, bei dem es sich
- sofern nur eines der beiden potentiellen Steuersignale die beiden genannten Verwertbarkeitskriterien erfüllt - um dieses potentielle Steuersignal handelt
und/oder
- sofern beide potentiellen Steuersignale die beiden genannten Verwertbarkeitskriterien erfüllen - um dasjenige potentielle Steuersignal handelt, welches mit dem Wert seines relativen Steuersignalpegels den zugehörigen Schwellenwert am weitesten übersteigt
und/oder
- sofern keines der beiden potentiellen Steuersignale die beiden genannten Verwertbarkeitskriterien erfüllt - um ein von diesen potentiellen Steuersignalen verschiedenes Steuersignal handelt.

17. Vorrichtung nach einem der Ansprüche 11 bis 15, **dadurch gekennzeichnet,**
**dass** vor dem Durchstechen des Werkstücks (1) mit dem Brennstrahl (5) mittels zweier Detektoren (11, 19) fortlaufend als potentieller oder tatsächlicher Steuerparameter die Intensität des an der Bearbeitungsstelle des Brennstrahls (5) emittierten Prozesslichtes gleichzeitig zweifach detektierbar ist,
**dass** die Auswerteeinheit (16) auf der Grundlage der beiden Steuerparameterdetektionen zu jeder von diesen ein potentielles Steuersignal erzeugt, wobei die beiden erzeugten potentiellen Steuersignale voneinander verschieden sind,
**dass** die Auswerteeinheit (16) jedes der beiden potentiellen Steuersignale darauf überprüft, ob der Wert des Gradienten des Steuersignalverlaufs über der Zeit einen vorgegebenen Schwellenwert für den Gradienten und ob und gegebenenfalls wie weit der Wert des relativen Steuersignalpegels einen vorgegebenen Schwellenwert für den relativen Steuersignalpegel übersteigt (Verwertbarkeitskriterien)
und **dass** die Auswerteeinheit (16) in Abhängigkeit von dem Ergebnis der Verwertbarkeitsüberprüfung der beiden potentiellen Steuersignale die Steuereinheit (17) zur Steuerung der Parameter des Schneidvorgangs auf der Grundlage eines tatsächlichen Steuersignals ansteuert, bei dem es sich
- sofern nur eines der beiden potentiellen Steuersignale die beiden genannten Verwertbarkeitskriterien erfüllt - um dieses potentielle Steuersignal handelt
und/oder
- sofern beide potentiellen Steuersignale die beiden genannten Verwertbarkeitskriterien erfüllen - um dasjenige potentielle Steuersignal handelt, welches mit dem Wert seines relativen Steuersignalpegels den zugehörigen Schwellenwert am weitesten übersteigt
und/oder
- sofern keines der beiden potentiellen Steuersignale die beiden genannten Verwertbarkeitskriterien erfüllt - um ein von diesen potentiellen Steuersignalen verschiedenes Steuersignal handelt.

18. Vorrichtung nach einem der Ansprüche 10 bis 17, **dadurch gekennzeichnet, dass** - sofern keines der überprüften potentiellen Steuersignale die betreffenden Verwertbarkeitskriterien erfüllt - die Steuereinheit (17) zur Steuerung der Parameter des Schneidvorgangs von der Auswerteeinheit (16) auf der Grundlage eines tatsächlichen Steuersignals angesteuert wird, das von der Dauer der Beaufschlagung des Werkstücks (1) mit dem Brennstrahl (5) abhängig ist.

## Claims

1. A process for the thermal cutting of workpieces (1) that is controlled and in which a thermal beam or jet (5) is directed onto the workpicce (1) to be machined, which thermal beam or jet (5) penetrates into the workpiece (1) and ultimately pierces the workpiece (1), the process being changed over, in dependence on a detected control parameter that indicates the penetration state of the workpiece (1), as soon as the thermal beam or jet (5) has pierced the workpiece (1), **characterised by** the following steps which are carried out before the workpiece (1) is pierced by the thermal beam or jet (5):
- at least two potential control parameters are continuously detected simultaneously,
- on the basis of the control parameter detections, at least one potential control signal is generated for each of at least two potential control parameters,
- at least two potential control signals associated with different potential control parameters are each examined according to at least two usability criteria which have higher priority or lower priority and of which at least one higher-priority usability criterion can be met in a qualified manner,
- for the further control of the process,
-- if only one of the potential control signals meets at least two usability criteria, that potential control signal is used as the actual control signal,
and/or
-- if a plurality of the potential control signals meet at least two usability criteria, the potential control signal that is most qualified to meet the higher-priority usability criterion is used as the actual control signal
and/or
-- if none of the potential control signals meets at least two usability criteria, instead of one of those potential control signals a control signal that is different therefrom is used as the actual control signal.

2. A process according to the preamble of claim 1, **characterised by** the following steps which are carried out before the workpiece (1) is pierced by the thermal beam or jet (5):
- a potential or actual control parameter is continuously detected a multiple number of times simultaneously,
- on the basis of the control parameter detections, at least one potential control signal is generated for each of at least two of those control parameter detections, the potential control signals associated with the different control parameter detections being different from one another,
- at least two potential control signals associated with different control parameter detections are each examined according to at least two usability criteria which have higher priority or lower priority and of which at least one higher-priority usability criterion can be met in a qualified manner,
- for the further controls of the process,
-- if only one of the potential control signals meets at least two usability criteria, that potential control signal is used as the actual control signal
and/or
-- if a plurality of the potential control signals meet at least two usability criteria, the potential control signal that is most qualified to meet the higher-priority usability criterion is used as the actual control signal
and/or
-- if none of the potential control signals meets at least two usability criteria, instead of one of those potential control signals a control signal that is different therefrom is used as the actual control signal.

3. A process according to either claim 1 or claim 2, **characterised in that** the intensity of the process light emitted at the machining site of the thermal beam or jet (5) is detected as one of the potential control parameters or as the potential or actual control parameter.

4. A process according to any one of the preceding claims for the thermal cutting of electrically conductive workpieces (1) by means of a cutting head (2) arranged at a distance from the workpiece (1) to be machined, **characterised in that** the electrical resistance of the medium between the cutting head (2) and the workpiece (1) to be machined is detected as one of the potential control parameters or as the potential or actual control parameter.

5. A process according to any one of the preceding claims, **characterised in that** the value of the gradient of the path of the control signal over time in relation to a threshold value for the gradient and/or the value of the relative control signal level (actual control signal level in relation to a maximum value of the control signal level) in relation to a threshold value for the relative control signal level is used as the usability criterion according to which the potential control signals are examined.

6. A process according to any one of the preceding claims, **characterised in that** there are used as usability criteria according to which the potential control signals are examined the value of the gradient of the path of the control signal over time in relation to a threshold value for the gradient and the value of the relative control signal level in relation to a threshold value for the relative control signal level, wherein the latter usability criterion has higher priority and can be met in a qualified manner.

7. A process according to any one of claims 1 and 3 to 6 for the thermal cutting of electrically conductive workpieces (1) by means of a cutting bead (2) arranged at a distance from the workpiece (1) to be machined, **characterised by** the following steps which are carried out before the workpiece (1) is pierced by the thermal beam or jet (5):
- the intensity of the process light emitted at the machining site of the thermal beam or jet (5) and the electrical resistance of the medium between the cutting head (2) and the workpiece (1) to be machined are continuously detected simultaneously as potential control parameters,
- on the basis of the detections of the two said potential control parameters a potential control signal is generated for each of those control parameters,
- each of the two potential control signals is examined as to whether the value of the gradient of the path of the control signal over time exceeds a predefined threshold value for the gradient and as to whether and, if so, to what extent the value of the relative control signal level exceeds a predefined threshold value for the relative control signal level (usability criteria),
- for the further control of the process,
-- if only one of the two potential control signals meets the two said usability criteria, that potential control signal is used as the actual control signal
and/or
-- if both of the potential control signals meet the two said usability criteria, the potential control signal that with the value of its relative control signal level most exceeds the associated threshold value is used as the actual control signal
and/or
-- if neither of the two potential control signals meets the two said usability criteria, instead of one of those potential control signals a control signal that is different therefrom is used as the actual control signal.

8. A process according to any one of claims 2 to 6, **characterised by** the following steps which are carried out before the workpiece (1) is pierced by the thermal beam or jet (5):
- the intensity of the process light emitted at the machining site of the thermal beam or jet (5) is continuously detected twice simultaneously as the potential or actual control parameter,
- on the basis of the two control parameter detections, a potential control signal is generated for each of those control parameter detections, the two potential control signals generated being different from each other,
- each of the two potential control signals is examined as to whether the value of the gradient of the path of the control signal over time exceeds a predefined threshold value for the gradient and as to whether and, if so, to what extent the value of the relative control signal level exceeds a predefined threshold value for the relative control signal level (usability criteria),
- for the further control of the process,
-- if only one of the two potential control signals meets the two said usability criteria, that potential control signal is used as the actual control signal,
and/or
-- if both of the potential control signals meet the two said usability criteria, the potential control signal that with the value of its relative control signal level most exceeds the associated threshold value is used as the actual control signal
and/or
-- if neither of the two potential control signals meets the two said usability criteria, instead of one of those two potential control signals a control signal that is different therefrom is used as the actual control signal.

9. A process according to any one of the preceding claims, **characterised in that** - if none of the potential control signals examined meets the relevant usability criteria- for the further control of the process a control signal generated on the basis of the length of time for which the workpiece (1) has been acted upon by the thermal beam, or jet (5) is used as the actual control signal.

10. An apparatus for the thermal cutting of workpieces (1), having a cutting head (2) that emits a thermal beam or jet (5) that penetrates into the workpiece (1) to be machined and ultimately pierces the workpiece (1) and having a numerical apparatus control system including at least one detector (8, 11, 19) for detecting at least one control parameter that indicates the penetration state of the workpiece (1), an evaluation unit (16) connected to the detector(s) (8, 11, 19), and a control unit (17), connected to the evaluation unit (16), for controlling the parameters of the cutting operation, **characterised in**
**that**, before the workpiece (1) is pierced by the thermal beam or jet (5), at least two potential control parameters arc continuously detected simultaneously by means of the detector(s) (8, 11),
**that****,** on the basis of the control parameter detections, the evaluation unit (16) generates at least one potential control signal for each of at least two potential control parameters and examines at least two potential control signals, associated with different potential control parameters, according to at least two usability criteria, wherein the usability criteria have higher priority or lower priority and at least one higher-priority usability criterion can be met in a qualified manner
and **that**, in dependence on the outcome of the usability examination of the potential control signals, the evaluation unit (16) activates the control unit (17) to control the parameters of the cutting operation based on an actual control signal that
- if only one of the potential control signals meets at least two usability criteria - is that potential control signal
and/or
- if a plurality of the potential control signals meet at least two usability criteria - is the potential control signal that is most qualified to meet the higher-priority usability criterion
and/or
- if none of the potential control signals meets at least two usability criteria - is a control signal that is different from those potential control signals.

11. An apparatus according to the preamble of claim 10, **characterised in**
**that**, before the workpiece (1) is pierced by the thermal beam or jet (5), a potential or actual control parameter is continuously detected a multiple number of times simultaneously by means of the detector(s) (11, 19),
**that****,** on the basis of the control parameter detections, the evaluation unit (16) generates at least one potential control signal for each of at least two of those control parameter detections, the potential control signals associated with the different control parameter detections being different from one another,
**that** the evaluation unit (16) also examines at least two potential control signals, associated with different control parameter detections, according to at least two usability criteria, wherein the usability criteria have higher priority or lower priority and at least one higher-priority usability criterion can be met in a qualified manner
and **that**, in dependence on the outcome of the usability examination of the potential control signals, the evaluation unit (16) finally activates the control unit (17) to control the parameters of the cutting operation based on an actual control signal that
- if only one of the potential control signals meets at least two usability criteria - is that potential control signal
and/or
- if a plurality of the potential control signals meet at least two usability criteria - is the potential control signal that is most qualified to meet the higher-priority usability criterion
and/or
- if none of the potential control signals meets at least two usability criteria- is a control signal that is different from those potential control signals.

12. An apparatus according to either claim 10 or claim 11, **characterised in that** the intensity of the process light emitted at the machining site of the thermal beam or jet (5) is detectable as one of the potential control parameters or as the potential or actual control parameter by means of the detector(s) (8, 11, 19).

13. An apparatus according to any one of claims 10 to 12, **characterised in that** at least one detector (11, 19) is formed by a photodiode (10, 18).

14. An apparatus according to any one of claims 10 to 13, wherein the cutting head (2) is arranged at a distance from the workpiece (1) to be machined and the latter is electrically conductive, **characterised in that** the electrical resistance of the medium between the cutting head (2) and the workpiece (1) to be machined is detectable as one of the potential control parameters or as the potential or actual control parameter by means of the detector(s) (8, 11, 19).

15. An apparatus according to any one of claims 10 to 14, **characterised in that** the evaluation unit (16) examines the potential control signals in question according to the usability criteria of claim 5 or claim 6.

16. An apparatus according to any one of claims 10 and 12 to 15, wherein the cutting head (2) is arranged at a distance from the workpiece (1) to be machined and the latter is electrically conductive, **characterised in**
**that**, before the workpiece (I) is pierced by the thermal beam or jet (5), the intensity of the process light emitted at the machining site of the thermal beam or jet (5) and the electrical resistance of the medium between the cutting head (2) and the workpiece (1) to be machined are continuously detectable simultaneously as potential control parameters by means of two detectors (8, 11),
**that,** on the basis of the detections of the two said potential control parameters, the evaluation unit (16) generates a potential control signal for each of those control parameters and examines each of the two potential control signals as to whether the value of the gradient of the path of the control signal over time exceeds a predefined threshold value for the gradient and as to whether and, if so, to what extent the value of the relative control signal level exceeds a predefined threshold value for the relative control signal level (usability criteria)
and **that**, in dependence on the outcome of the usability examination of the two potential control signals, the evaluation unit (16) activates the control unit (17) to control the parameters of the cutting operation based on an actual control signal that
- if only one of the two potential control signals meets the two said usability criteria - is that potential control signal
and/or
- if both of the potential control signals meet the two said usability criteria - is the potential control signal that with the value of its relative control signal level most exceeds the associated threshold value
and/or
- if neither of the two potential control signals meets the two said usability criteria - is a control signal that is different from those potential control signals.

17. An apparatus according to any one of claims 11 to 15, **characterised in**
**that**, before the workpiece (1) is pierced by the thermal beam or jet (5), the intensity of the process light emitted at the machining site of the thermal beam or jet (5) is continuously detectable twice simultaneously as potential or actual control parameter by means of two detectors (11, 19),
**that****,** on the basis of the two control parameter detections, the evaluation unit (16) generates a potential control signal for each of those parameter detections, the two potential control signals generated being different from each other,
**that** the evaluation unit (16) examines each of the two potential control signals as to whether the value of the gradient of the path of the control signal over time exceeds a predefined threshold value for the gradient and as to whether and, if so, to what extent the value of the relative control signal level exceeds a predefined threshold value for the relative control signal level (usability criteria)
and **that**, in dependence on the outcome of the usability examination of the two potential control signals, the evaluation unit (16) activates the control unit (17) to control the parameters of the cutting operation based on an actual control signal that
- if only one of the two potential control signals meets the two said usability criteria - is that potential control signal
and/or
- if both of the potential control signals meet the two said usability criteria - is the potential control signal that with the value of its relative control signal level most exceeds the associated threshold value
and/or
- if neither of the two potential control signals meets the two said usability criteria - is a control signal that is different from those potential control signals.

18. An apparatus according to any one of claims 10 to 17, **characterised in that** - if none of the potential control signals examined meets the relevant usability criteria- the control unit (17) is activated by the evaluation unit (16) to control the parameters of the cutting operation based on an actual control signal that is dependent on the length of time for which the workpiece (1) has been acted upon by the thermal beam or jet (5).

## Revendications

1. Procédé de découpage thermique de pièces (1), qui est commandé et dans le cadre duquel un faisceau ou jet thermique (5) est orienté sur la pièce (1) destinée à être usinée, lequel faisceau ou jet pénètre dans la pièce (1) et finit par perforer la pièce (1), le procédé étant inversé en fonction d'un paramètre de commande détecté et reproduisant l'état de pénétration de la pièce (1), dès que le faisceau ou jet thermique (5) a perforé la pièce (1), **caractérisé par** les étapes de procédé suivantes, réalisées avant de perforer la pièce (1) avec le faisceau ou jet thermique (5) :
- de façon continue, au moins deux paramètres de commande potentiels sont détectés simultanément,
- sur la base des détections des paramètres de commande, respectivement au moins un signal de commande potentiel est généré pour au moins deux paramètres de commande potentiels,
- on vérifie que respectivement au moins deux signaux de commande potentiels, associés à différents paramètres de commande potentiels, présentent au moins deux critères d'exploitabilité, qui sont prioritaires ou secondaires et parmi lesquels au moins un critère d'exploitabilité prioritaire peut être rempli de façon qualifiée,
- pour l'autre commande du procédé,
-- dans la mesure où seul un des signaux de commande potentiels remplit au moins deux critères d'exploitabilité, on se sert de ce signal de commande potentiel comme signal de commande effectif,
et/ou
-- dans la mesure où plusieurs des signaux de commande potentiels remplissent au moins deux critères d'exploitabilité, on se sert de ce signal de commande potentiel comme signal de commande effectif, lequel remplit le critère d'exploitabilité prioritaire de la façon la plus qualifiée
et/ou
-- dans la mesure où aucun des signaux de commande potentiels ne remplit au moins deux critères d'exploitabilité, au lieu d'un de ces signaux de commande potentiels, on se sert d'un signal de commande différent de ceux-ci comme signal de commande effectif.

2. Procédé selon le préambule de la revendication 1, **caractérisé par** les étapes de procédé suivantes, réalisées avant de perforer la pièce (1) avec le faisceau ou jet thermique (5) :
- de façon continue, un paramètre de commande potentiel ou effectif est détecté simultanément plusieurs fois,
- sur la base des détections des paramètres de commande, respectivement au moins un signal de commande potentiel est généré pour au moins deux de ces détections, les signaux de commande potentiels associés aux différentes détections de paramètres de commande étant différents les uns des autres,
- on vérifie que respectivement au moins deux signaux de commande potentiels associés à différentes détections de paramètres de commande présentent deux critères d'exploitabilité, qui sont prioritaires ou secondaires et parmi lesquels au moins un critère d'exploitabilité prioritaire peut être rempli de façon qualifiée, - pour les autres commandes du procédé,
-- dans la mesure où seul un des signaux de commande potentiels remplit au moins deux critères d'exploitabilité, on se sert de ce signal de commande potentiel comme signal de commande effectif
et/ou
-- dans la mesure où plusieurs des signaux de commande potentiels remplissent au moins deux critères d'exploitabilité, on se sert comme signal de commande effectif du signal de commande potentiel qui remplit le critère d'exploitabilité prioritaire de la façon la plus qualifiée
et/ou
-- dans la mesure où aucun des signaux de commande potentiels ne remplit au moins deux critères d'exploitabilité, au lieu d'un de ces signaux de commande potentiels, on se sert d'un signal de commande différent de ceux-ci comme signal de commande effectif.

3. Procédé selon l'une des revendications 1 et 2, **caractérisé en ce que** l'intensité de la lumière du processus émise au point d'usinage du faisceau ou jet thermique (5) est détectée comme un des paramètres de commande potentiels et/ou comme paramètre de commande potentiel ou effectif.

4. Procédé selon l'une des revendications précédentes de découpage thermique de pièces (1) électriquement conductrices au moyen d'une tête de coupe (2) disposée à distance de la pièce (1) destinée à être usinée, **caractérisé en ce que** la résistance électrique du milieu entre la tête de coupe (2) et la pièce (1) destinée à être usinée est détectée comme un des paramètres de commande potentiels et/ou comme paramètre de commande potentiel ou effectif.

5. Procédé selon l'une des revendications précédentes, **caractérisé en ce que** comme critère d'exploitabilité, selon lequel on vérifie les signaux de commande potentiels, on se sert de la valeur du gradient de l'allure du signal de commande sur le temps par rapport à une valeur seuil pour le gradient et/ou de la valeur du niveau de signal de commande relatif (niveau de signal de commande effectif par rapport à une valeur maximale du niveau de signal de commande) par rapport à une valeur seuil pour le niveau de signal de commande relatif.

6. Procédé selon l'une des revendications précédentes, **caractérisé en ce que** comme critères d'exploitabilité, selon lequel on vérifie les signaux de commande potentiels, on se sert de la valeur du gradient de l'allure du signal de commande sur le temps par rapport à une valeur seuil pour le gradient ainsi que de la valeur du niveau de signal de commande relatif par rapport à une valeur seuil pour le niveau de signal de commande relatif, le critère d'exploitabilité cité en dernier étant prioritaire et pouvant être rempli de façon qualifiée.

7. Procédé selon l'une des revendications 1 et 3 à 6 de découpage thermique de pièces électriquement conductrices (1) au moyen d'une tête de coupe (2) disposée à distance de la pièce (1) destinée à être usinée, **caractérisé par** les étapes de procédé suivantes, réalisées avant de perforer la pièce (1) avec le faisceau ou jet thermique (5) :
- de façon continue, l'intensité de la lumière du processus émise au point d'usinage du faisceau ou jet thermique (5) ainsi que la résistance électrique du milieu entre la tête de coupe (2) et la pièce (1) destinée à être usinée sont détectées simultanément comme paramètres de commande potentiels,
- sur la base des détections des deux paramètres de commande potentiels cités, un signal de commande potentiel est généré pour chacun de ceux-ci,
- on vérifie pour chacun des deux signaux de commande potentiels si la valeur du gradient de l'allure du signal de commande sur le temps dépasse une valeur seuil prédéfinie pour le gradient et si et éventuellement dans quelle mesure la valeur du niveau de signal de commande relatif dépasse une valeur seuil prédéfinie pour le niveau de signal de commande relatif (critères d'exploitabilité), - pour l'autre commande du procédé,
-- dans la mesure où seul un des deux signaux de commande potentiels remplit les deux critères d'exploitabilité cités, on se sert de ce signal de commande potentiel comme signal de commande effectif
et/ou
-- dans la mesure où les deux signaux de commande potentiels remplissent les deux critères d'exploitabilité cités, on se sert comme signal de commande effectif du signal de commande potentiel qui, avec la valeur de son niveau de signal de commande relatif, dépasse le plus largement la valeur seuil associée
et/ou
-- dans la mesure où aucun des deux signaux de commande potentiels ne remplit les deux critères d'exploitabilité cités, au lieu d'un de ces signaux de commande potentiels, on se sert d'un signal de commande différent de ceux-ci comme signal de commande effectif.

8. Procédé selon l'une des revendications 2 à 6, **caractérisé par** les étapes de procédé suivantes, réalisées avant de perforer la pièce (1) avec le faisceau ou jet thermique (5) :
- de façon continue, l'intensité de la lumière du processus émise au point d'usinage du faisceau ou jet thermique (5) est détectée simultanément deux fois comme paramètre potentiel ou effectif,
- sur la base des deux détections de paramètres de commande potentiels, un signal de commande est généré pour chacun de ceux-ci, les deux signaux de commande potentiels générés étant différents l'un de l'autre,
- on vérifie pour chacun des deux signaux de commande potentiels si la valeur du gradient de l'allure du signal de commande sur le temps dépasse une valeur seuil prédéfinie pour le gradient et si et éventuellement dans quelle mesure la valeur du niveau de signal de commande relatif dépasse une valeur seuil prédéfinie pour le niveau de signal de commande relatif (critères d'exploitabilité), - pour l'autre commande du procédé,
-- dans la mesure où seul un des deux signaux de commande potentiels remplit les deux critères d'exploitabilité cités, on se sert de ce signal de commande potentiel comme signal de commande effectif,
et/ou
-- dans la mesure où les deux signaux de commande potentiels remplissent les deux critères d'exploitabilité cités, on se sert comme signal de commande effectif du signal de commande potentiel qui, avec la valeur de son niveau de signal de commande relatif, dépasse le plus largement la valeur seuil associée
et/ou
-- dans la mesure où aucun des deux signaux de commande potentiels ne remplit les deux critères d'exploitabilité cités, au lieu d'un de ces deux signaux de commande potentiels, on se sert d'un signal de commande différent de ceux-ci comme signal de commande effectif.

9. Procédé selon l'une des revendications précédentes, **caractérisé en ce que** - dans la mesure où aucun des signaux de commande potentiels vérifiés ne remplit les critères d'exploitabilité en question- en vue d'une autre commande du procédé, on se sert d'un signal de commande généré sur la base de la durée de la sollicitation de la pièce (1) avec le faisceau ou jet thermique (5) comme signal de commande effectif.

10. Dispositif de découpage thermique de pièces (1), doté d'une tête de coupe (2), qui émet un faisceau ou jet thermique (5) pénétrant dans la pièce (1) destinée à être usinée et finissant par perforer la pièce (1) et d'une commande de dispositif numérique, qui comporte au moins un détecteur (8, 11, 19) destiné à détecter au moins un paramètre de commande reproduisant l'état de pénétration de la pièce (1), une unité d'analyse (16) reliée au ou aux détecteur(s) (8, 11, 19) ainsi qu'une unité de commande (17) reliée à l'unité d'analyse (16), destinée à commander les paramètres du processus de découpage, **caractérisé**
**en ce que** avant de perforer la pièce (1) avec le faisceau ou jet thermique (5), au moins deux paramètres de commande potentiels peuvent être détectés, de façon continue, simultanément au moyen du ou des détecteur(s) (8, 11),
**en ce que** l'unité d'analyse (16), sur la base des détections de paramètres de commande, génère pour au moins deux paramètres de commande potentiels au moins un signal de commande potentiel et vérifie si respectivement au moins deux signaux de commande potentiels, associés aux différents paramètres de commande potentiels, présentent au moins deux critères d'exploitabilité, les critères d'exploitabilité étant prioritaires ou secondaires et au moins un critère d'exploitabilité prioritaire pouvant être rempli de façon qualifiée
et **en ce que** l'unité d'analyse (16), en fonction du résultat du contrôle de la vérification d'exploitabilité des signaux de commande potentiels, commande l'unité de commande (17) destinée à commander les paramètres du processus de découpage sur la base d'un signal de commande effectif, dans lequel,
- dans la mesure où seul un des signaux de commande potentiels remplit au moins deux critères d'exploitabilité -il s'agit de ce signal de commande potentiel
et/ou
- dans la mesure où plusieurs des signaux de commande potentiels remplissent au moins deux critères d'exploitabilité - il s'agit du signal de commande potentiel qui remplit le critère d'exploitabilité prioritaire de la façon la plus qualifiée
et/ou
- dans la mesure où aucun des signaux de commande potentiels ne remplit au moins deux critères d'exploitabilité - il s'agit d'un signal de commande différent de ces signaux de commande potentiels.

11. Dispositif selon le préambule de la revendication 10, **caractérisé**
**en ce qu'**avant de perforer la pièce (1) avec le faisceau ou jet thermique (5), un paramètre de commande potentiel ou effectif peut être détecté de façon continue plusieurs fois simultanément au moyen du ou des détecteur(s) (11, 19),
**en ce que** l'unité d'analyse (16), sur la base des détections de paramètres de commande, génère pour au moins deux de celles-ci respectivement au moins un signal de commande potentiel, des signaux de commande associés aux différentes détections de paramètres de commande étant différents les uns des autres
- **en ce que** l'unité d'analyse (16) vérifie en outre qu'au moins deux critères d'exploitabilité sont présents dans au moins deux signaux de commande potentiels associés à deux différentes détections de paramètres de commande, les critères d'exploitabilité étant prioritaires ou secondaires et au moins un critère d'exploitabilité prioritaire pouvant être rempli de façon qualifiée,
et **en ce que** l'unité d'analyse (16), en fonction du résultat de la vérification d'exploitabilité des signaux de commande potentiels, finit par commander l'unité de commande (17) destinée à commander les paramètres du processus de découpage sur la base d'un signal de commande effectif, dans lequel
- dans la mesure où seul un des signaux de commande potentiels remplit au moins deux critères d'exploitabilité -il s'agit de ce signal de commande potentiel,
et/ou
- dans la mesure où plusieurs des signaux de commande potentiels remplissent au moins deux critères d'exploitabilité - il s'agit du signal de commande potentiel qui remplit le critère d'exploitabilité prioritaire de la façon la plus qualifiée
et/ou
- dans la mesure où aucun des signaux de commande potentiels ne remplit au moins deux critères d'exploitabilité- il s'agit d'un signal de commande différent de ces signaux de commande potentiels.

12. Dispositif selon l'une des revendications 10 et 11, **caractérisé en ce que** l'intensité de la lumière du processus émise au point d'usinage du faisceau ou jet thermique (5) peut être détectée comme un des paramètres de commande potentiels et/ou comme paramètre de commande potentiel ou effectif, au moyen du ou des détecteur(s) (8, 11, 19).

13. Dispositif selon l'une des revendications 10 à 12, **caractérisé en ce qu'**au moins un détecteur (11, 19) est formé par une photodiode (10, 18).

14. Dispositif selon l'une des revendications 10 à 13, la tête de coupe (2) étant disposée à distance de la pièce (1) destinée à être usinée et cette dernière étant électriquement conductrice, **caractérisé en ce que** la résistance électrique du milieu entre la tête de coupe (2) et la pièce (1) destinée à être usinée peut être détectée comme un des paramètres de commande potentiels et/ou comme paramètre de commande potentiel ou effectif au moyen du ou des détecteur(s) (8, 11, 19).

15. Dispositif selon l'une des revendications 10 à 14, **caractérisé en ce que** l'unité d'analyse (16) vérifie que les signaux de commande potentiels en question présentent les critères d'exploitabilité selon la revendication 5 ou la revendication 6.

16. Dispositif selon l'une des revendications 10 et 12 à 15, la tête de coupe (2) étant disposée à distance de la pièce (1) destinée à être usinée et cette dernière étant électriquement conductrice, **caractérisé**
**en ce qu'**avant de perforer la pièce (1) avec le faisceau ou jet thermique (5), l'intensité de la lumière du processus émise au point d'usinage du faisceau ou jet thermique (5) ainsi que la résistance électrique du milieu entre la tête de coupe (2) et la pièce (1) destinée à être usinée peuvent être détectées au moyen de deux détecteurs (8, 11) de façon continue, en tant que paramètres de commande potentiels,
**en ce que** l'unité d'analyse (16), sur la base des détections des deux paramètres de commande cités, génère pour chacun de ceux-ci un signal de commande potentiel et vérifie pour chacun des deux signaux de commande potentiels si la valeur du gradient de l'allure du signal de commande sur le temps dépasse une valeur seuil prédéfinie pour le gradient et si et éventuellement dans quelle mesure la valeur du niveau de signal de commande relatif dépasse une valeur seuil prédéfinie pour le niveau de signal de commande relatif (critères d'exploitabilité),
et **en ce que** l'unité d'analyse (16), en fonction du résultat de la vérification d'exploitabilité des deux signaux de commande potentiels, commande l'unité de commande (17) destinée à commander les paramètres du processus de découpage sur la base d'un signal de commande effectif, dans lequel
- dans la mesure où seul un des deux signaux de commande potentiels remplit les deux critères d'exploitabilité cités -il s'agit de ce signal de commande potentiel
et/ou
- dans la mesure où les deux signaux de commande potentiels remplissent les deux critères d'exploitabilité cités- il s'agit du signal de commande potentiel qui, avec la valeur de son niveau de signal de commande relatif, dépasse le plus largement la valeur seuil associée
et/ou
- dans la mesure où aucun des deux signaux de commande potentiels ne remplit les deux critères d'exploitabilité cités- il s'agit d'un signal de commande différent de ces signaux de commande potentiels.

17. Dispositif selon l'une des revendications 11 à 15, **caractérisé**
**en ce qu'**avant de perforer la pièce (1) avec le faisceau ou jet thermique (5), l'intensité de la lumière du processus émise au point d'usinage du faisceau ou jet thermique (5) peut être détectée simultanément deux fois comme paramètre de commande potentiel ou effectif au moyen de deux détecteurs (11, 19) de façon continue,
**en ce que** l'unité d'analyse (16), sur la base des deux détections de paramètre de commande, génère pour chacune de celles-ci un signal de commande potentiel, les deux signaux de commande potentiels générés étant différents l'un de l'autre,
**en ce que** l'unité d'analyse (16) vérifie pour chacun des deux signaux de commande potentiels si la valeur du gradient de l'allure du signal de commande sur le temps dépasse une valeur seuil prédéfinie pour le gradient et si et éventuellement dans quelle mesure la valeur du niveau de signal de commande relatif dépasse une valeur seuil prédéfinie pour le niveau de signal de commande relatif (critères d'exploitabilité),
et **en ce que** l'unité d'analyse (16), en fonction du résultat de la vérification d'exploitabilité des deux signaux de commande potentiels, commande l'unité de commande (17) destinée à commander les paramètres du processus de découpage sur la base d'un signal de commande effectif, dans lequel
- dans la mesure où seul un des deux signaux de commande potentiels remplit les deux critères d'exploitabilité cités -il s'agit de ce signal de commande potentiel
et/ou
- dans la mesure où les deux signaux de commande potentiels remplissent les deux critères d'exploitabilité cités- il s'agit du signal de commande potentiel qui, avec la valeur de son niveau de signal de commande relatif, dépasse le plus largement la valeur seuil associée
et/ou
- dans la mesure où aucun des deux signaux de commande potentiels ne remplit les deux critères d'exploitabilité cités- il s'agit d'un signal de commande différent de ces signaux de commande potentiels.

18. Dispositif selon l'une des revendications 10 à 17, **caractérisé en ce que** -dans la mesure où aucun des signaux de commande potentiels vérifiés ne remplit les critères d'exploitabilité en question- l'unité de commande (17) destinée à commander les paramètres du processus de découpage est commandée par l'unité d'analyse (16) sur la base d'un signal de commande effectif, qui dépend de la durée de la sollicitation de la pièce (1) avec le faisceau ou jet thermique (5).
